# EUROPÄISCHE PATENTANMELDUNG

(11) **EP 2 075 558 A2**
(43) Veröffentlichungstag der Anmeldung: **01.07.2009**
(21) Anmeldenummer: 08167707.2
(22) Anmeldetag: 28.10.2008
(51) Int. Cl.: G01K 1/08, G01K 7/22

(54) **Temperatursensor**

(30) Priorität: 28.12.2007 DE 102007063309
(71) Anmelder: ROBERT BOSCH GMBH, 70442 Stuttgart (DE)
(72) Erfinder: Opp, Andreas, 71277, Rutesheim (DE); Rosenland, Marc, 74343, Hohenhaslach (DE)

(57) **Zusammenfassung**

Die Erfindung betrifft einen Temperatursensor und ein Verfahren zur Herstellung eines Temperatursensors (10), wobei der Temperatursensor (10) ein Thermistorelement (21) aufweist, das in einem Schutzrohr angeordnet ist, wobei das Thermistorelement (21) durch ein Fixierteil (22) in dem Schutzrohr (23) fixiert ist, **dadurch gekennzeichnet, dass** das Verfahren folgende Schritte aufweist:
- Einfüllen einer thixotropen Masse (122) in das Schutzrohr (23)
- Einführen des Thermistorelements (21) in die thixotrope Masse (122), wobei die thixotropen Masse (122) während des Einführens des Thermistorelements (121) zumindest zeitweise in Vibration versetzt wird.

## Beschreibung

### Stand der Technik

Die Erfindung geht aus von einem Verfahren zur Herstellung eines Temperatursensors nach dem Oberbegriff des unabhängigen Anspruchs 1.

Ein derartiger Temperatursensor ist beispielsweise aus der DE 197 47 977 A1 bekannt und weist ein Thermistorelement auf, das in einem Schutzrohr angeordnet ist und durch ein Fixierteil in dem Schutzrohr fixiert ist.

Bei der Herstellung des in der DE 197 47 977 A1 beschriebenen Temperatursensors wird das Fixierteil durch Verguss einer keramischen Masse in das Schutzrohr eingebracht. Üblicherweise wird die keramische Vergussmasse nach dem Verguss durch eine Wärmebehandlung oder durch Trocknung ausgehärtet.

Nachteilig hieran ist, dass die keramische Vergussmasse nur langsam aushärtet. Hierdurch ergeben sich zum einen Verzögerungen im Fertigungsablauf, zum anderen ist es nicht möglich, das Thermistorelement bereits unmittelbar nach dem Verguss durch die Vergussmasse zu fixieren, sodass es notwendig ist, das Thermistorelement auf eine andere Art zumindest provisorisch zu fixieren, was einen erhöhten Fertigungsaufwand darstellt.

### Vorteil der Erfindung

Das erfindungsgemäße Verfahren zur Herstellung eines Temperatursensors mit den kennzeichnenden Merkmalen des unabhängigen Anspruchs 1 hat demgegenüber den Vorteil, dass die Viskosität der thixotropen Masse von außen gezielt und praktisch verzögerungsfrei gesteuert werden kann und somit Verzögerungen im Fertigungsablauf vermieden werden können. Hierzu weist das Verfahren einen Schritt auf, in dem die thixotropen Masse in das Schutzrohr eingefüllt wird und einen Schritt, in dem das Thermistorelement in die thixotrope Masse eingeführt wird, während die thixotropen Masse zumindest zeitweise in Vibration versetzt wird.

Der Begriff der Thixotropie bezeichnet die Eigenschaft eines Stoffes, bei Scherbeanspruchung, zum Beispiel durch Vibration oder durch Rühren oder durch Schütteln, seine Viskosität zu verringern. Bei Unterbrechung der Scherbeanspruchung wird wieder die Ausgangsviskosität angenommen.

Durch die in den abhängigen Ansprüchen aufgeführten Maßnahmen sind vorteilhafte Weiterentwicklungen des im unabhängigen Anspruch angegebenen Verfahrens möglich.

Vorteilhafterweise wird die thixotrope Masse so in Vibration versetzt, dass ihre Viskosität gegenüber einem Ruhezustand abnimmt, vorzugsweise um mehr als 30%. Auf diese Weise ist es möglich, dass das Thermistorelement leicht in die thixotrope Masse eingeführt werden kann und dass nach Deaktivierung der Vibration eine hohe Viskosität beziehungsweise eine hohe Festigkeit gewährleistet ist.

Vorteilhafterweise wird die thixotrope Masse so in Vibration versetzt, dass die Vibration im Frequenzbereich von 3000 bis 5000 Schwingungen pro Minute liegt und/oder einen Hub von 0,5 bis 1,5 mm aufweist. Vibrationen dieser Art lassen sich mit geringem technischen Aufwand erzeugen, und gewährleisten zugleich eine hohe Ab- beziehungsweise Zunahme der Viskosität der thixotropen Masse.

Es ist vorteilhaft, die Vibration über das Schutzrohr in die thixotrope Masse einzuleiten, da dass Schutzrohr eine gute mechanische Kopplung sowohl zur thixotropen Masse als auch nach außen ermöglicht. Vorteilhafterweise kommt hierbei ein Rüttler oder ein Rütteltisch zum Einsatz.

Alternativ oder zusätzlich kann die Vibration über das Thermistorelement in die thixotrope Masse eingebracht werden. Damit ergibt sich der Vorteil, dass sich die Viskosität der thixotropen Masse lokal im Bereich des Thermistorelements besonders stark herabsetzt, und die verringerte Viskosität im Bereich des Thermistorelements kann mit besonders geringer Vibrationsleistung aufrecht erhalten werden.

Vorteilhaft wird der thixotropen Masse ein Verflüssiger zugesetzt, wobei der Verflüssiger insbesondere eine Carbonsäure oder ein kurzkettiges Acrylat oder ein Polyglycol enthält und/oder die thixotrope Masse enthält einen keramischen Werkstoff, insbesondere Sinterkorund und/oder die thixotrope Masse enthält Glas. Bei den genannten Zusammensetzungen lässt sich die Viskosität der thixotropen Masse besonders stark durch Vibrationen reduzieren. Hierbei hat es sich als besonders vorteilhaft erwiesen, wenn der in der thixotropen Masse enthaltene keramische Werkstoff eine Tabulartonerde, vorzugsweise mit einer Oberkorngröße von 20 - 125 µm enthält und/oder eine Reaktivtonerde, vorzugsweise mit einer mittleren Korngröße D50 von 0,2 - 1 µm enthält.

Vorteilhaft weist das Verfahren einen Verfahrensschritt auf, bei dem die thixotrope Masse durch eine Wärmebehandlung auskristallisiert. Durch das Auskristallisieren verbessert sich die Temperaturbeständigkeit des Fixierteils. Es ist somit gewährleistet, dass es beim Einsatz des Temperatursensors auch im Temperaturbereich über 800° C nicht zu einer Erweichung oder einem Schwinden kommt

Besonders vorteilhaft ist es, wenn die thixotrope Masse beim Auskristallisieren eine Volumenzunahme von mindestens 0,5%, bevorzugt 2 - 3%, erfährt. Hierdurch erhöht sich die mechanische Festigkeit der Fixierung des Thermistorelements durch das Fixierteil im Schutzrohr. Durch die Volumenzunahme reduziert sich zudem vorteilhaft der Porengehalt im Fixierteil, so nimmt die Wärmeleitfähigkeit des Fixierteils zu und die Ansprechzeit des Temperatursensors verkürzt sich. Hierfür hat sich ein Porengehalt von weniger als 5%, bevorzugt 1 - 3%, als besonders günstig erwiesen.

### Zeichnung

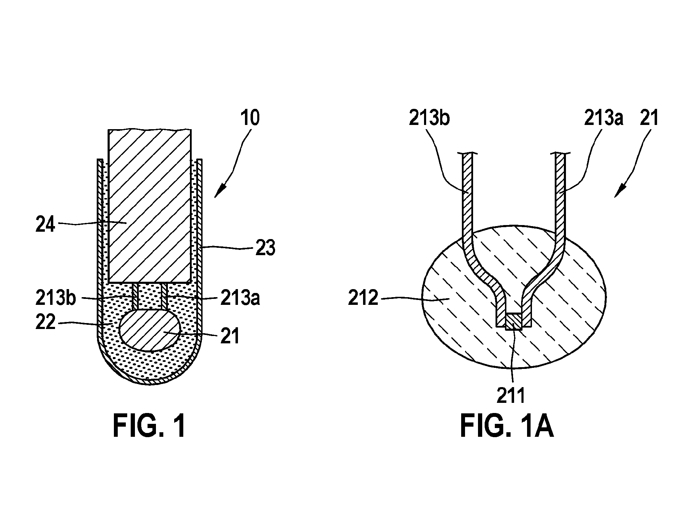

Ein Ausführungsbeispiel der Erfindung ist in der Zeichnung dargestellt und in der nachfolgenden Beschreibung näher erläutert. Ein erfindungsgemäßer Temperatursensor ist in Figur 1 in Schnittdarstellung gezeigt. Die Figur 1a stellt einen Ausschnitt der Figur 1 vergrößert und detailliert dar.

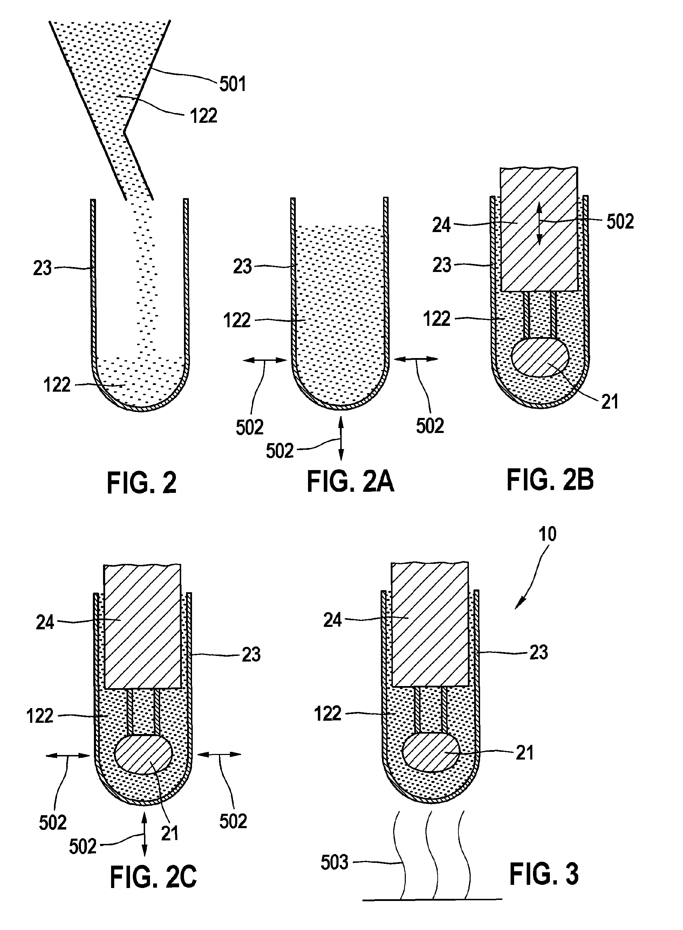

Die Figuren 2, 2a, 2b und 2c und 3 zeigen Temperatursensoren in Schnittdarstellungen während verschiedener Herstellungsschritte.

### Beschreibung des Ausführungsbeispiels

Die Figur 1 zeigt einen erfindungsgemäßen Temperatursensor 10. Der Temperatursensor 10 weist ein Thermistorelement 21, ein Fixierteil 22 und ein Schutzgehäuse 23 auf. Das Thermistorelement 21 wird durch das Fixierteil 22 in dem Schutzgehäuse 23 fixiert.

Das Thermistorelement 21 ist ein temperaturabhängiger Widerstand, zum Beispiel ein NTC-Widerstand (negativ temperature coefficient, Heißleiter) oder ein PTC-Widerstand (positiv temperature coefficient, Kaltleiter).

Der Aufbau des Thermistorelements 21 ist in Figur 1a beispielhaft und detailliert dargestellt. Das Thermistorelement 21 weist ein Widerstandsteil 211 auf, das ein Halbleitermaterial, beispielsweise Fe₂O₃, ZnTiO₄ oder MgCr₂O₄ enthält. Das Widerstandsteil 211 definiert die Temperatur-Widerstands-Charakteristik des Thermistorelements 21. Das Widerstandsteil 211 wird durch zwei Zuleitungen 213a, 213b kontaktiert. Eine Umhüllung 212 umgibt das Widerstandsteil 211 und Teile der Zuleitungen 213a, 213b. Die Umhüllung 212 dient dem Schutz des Widerstandsteils 211. Die Umhüllung 212 enthält Glas oder einen anderen thermisch und mechanisch beständigen Stoff.

Die Zuleitungen 213a, 213b münden auf der der Umhüllung 212 abgewandten Seite in eine mineralisch isolierte Leitung 24. Letztere besteht aus einem thermisch und mechanisch beständigen Material und dient der Isolation der Zuleitungen 213a, 213b. Die mineralisch isolierte Leitung 24 wird in diesem Beispiel ebenfalls durch das Fixierteil 22 im Schutzrohr 23 fixiert. Alternativ ist es auch möglich, auf die Verwendung einer mineralisch isolierten Leitung 24 zu verzichten und den Schutz der Zuleitungen 213a, 213b allein durch das Fixierteil 22 sicher zu stellen.

Das Fixierteil 22, das nach dem im Folgenden beschriebenen erfindungsgemäßen Verfahren hergestellt wird, besteht aus einem Kompositwerkstoff, der eine kristalline Struktur aufweist und sich durch eine sehr gute mechanische und thermische Beständigkeit auszeichnet. Der Nachweis der kristallinen Struktur des Fixierteils 22 kann mittels Röntgenbeugung erfolgen. Der Porengehalt des Fixierteils 22 liegt im Ausführbeispiel bei 1%.

Figur 2 zeigt ein längliches, einseitig offenes Schutzrohr 23, in das durch eine Befülleinrichtung 501 eine thixotrope Masse 122 zum Beispiel bei Raumtemperatur (ca. 20° C) eingefüllt wird. Die thixotrope Masse 122 setzt sich zusammen aus Sinterkorundpulver und Glasfritte im Mischungsverhältnis 2 zu 1. Das Sinterkorundpulver liegt als Mischung einer Tonerde mit einer Oberkorngröße von 50 µm und einer Reaktivtonerde mit einer mittleren Korngröße D50 von 0,5 µm vor.

Figur 2a zeigt einen sich an das Befüllen des Schutzrohrs 23 anschließenden Verfahrensschritt. Hierbei werden durch das Schutzrohr 23 von außen Vibrationen in die thixotrope Masse 122 eingekoppelt. Im Beispiel erfolgt dies durch einen Rüttler 502, der zum Beispiel als Rütteltisch ausgebildet sein kann. Alternativ ist es auch möglich, die Vibrationen nicht durch das Schutzrohr 23, sondern, wie in Figur 2b gezeigt, mittels des Thermistorelements 21 in die thixotrope Masse einzubringen. Die eingekoppelten Vibrationen haben zur Folge, dass die Viskosität der thixotropen Masse 122 im Vergleich zu einem Ruhezustand herabgesetzt ist.

Figur 2c zeigt einen nachfolgenden Verfahrensschritt, bei dem das Thermistorelement 21 in die thixotrope und in diesem Stadium geringviskose Masse 122 vollständig eingetaucht wird. Während dieses Verfahrensschritts werden Vibrationen in die thixotrope Masse 122 eingekoppelt. Das Eintauchen des Thermistorelements 21 in die thixotrope Masse 122 kann beispielsweise bei Raumtemperatur (ca. 20° C) erfolgen. Im Anschluss an das Eintauchen des Thermistorelements 21 in die thixotrope Masse 122 werden die Vibrationen deaktiviert, und es kommt zu einer sprunghaften Zunahme der Viskosität der thixotropen Masse 122.

Im Ausführbeispiel ist der thixotropen Masse 122 kein Verflüssiger zugegeben. Alternativ kann die thixotrope Masse 122 einen Verflüssiger, zum Beispiel Carbonsäure und/oder ein kurzkettiges Acrylat und/oder ein Polyglycol, enthalten. In diesem Fall ist es bevorzugt, im Anschluss an die Deaktivierung der Vibrationen einen Trocknungsprozess durchzuführen.

Figur 3 zeigt eine im Ausführbeispiel nachfolgend durchgeführte Wärmebehandlung 503. Hierbei wird das Sensorelement 10 auf eine Temperatur im Bereich zwischen 800 und 950° C erhitzt. Diese Temperatur wird zwischen 10 und 150 min, vorzugsweise 30 min, gehalten. Durch die Erwärmung schmilzt das als Glasfritte vorliegende Glas und füllt die Zwischenräume zwischen den Sinterkorundkörnern auf. Aufgrund der keimbildenden Wirkung der Korundkörner kommt es dabei zu einer Auskristallisation und zu einer Erstarrung des Glases, sodass die thixotrope Masse 122, die nunmehr das Fixierteil 22 bildet, keine amorphe Phase mehr aufweist. Mit der Kristallisation verbunden ist eine Volumenzunahme der thixotropen Masse 122, die im vorliegenden Ausführbeispiel 3% beträgt. Die Volumenzunahme der thixotropen Masse 122 bewirkt, dass sich die mechanische Festigkeit der Fixierung des Thermistorelements 21im Schutzrohr 23 verbessert. Ferner reduziert sich durch die Volumenzunahme der Porengehalt der thixotropen Masse 122 auf im Beispiel 1%.

## Patentansprüche

1. Verfahren zur Herstellung eines Temperatursensors (10), wobei der Temperatursensor (10) ein Thermistorelement (21) aufweist, das in einem Schutzrohr (23) angeordnet ist, wobei das Thermistorelement (21) durch ein Fixierteil (22) in dem Schutzrohr (23) fixiert ist, **dadurch gekennzeichnet, dass** das Verfahren folgende Schritte aufweist:
- Einfüllen einer thixotropen Masse (122) in das Schutzrohr (23)
- Einführen des Thermistorelements (21) in die thixotrope Masse (122), wobei die thixotropen Masse (122) während des Einführens des Thermistorelements (121) zumindest zeitweise in Vibration versetzt wird.

2. Verfahren nach Anspruch 1, **dadurch gekennzeichnet, dass** die thixotrope Masse (122) derart in Vibration versetzt wird, dass ihre Viskosität gegenüber einem Ruhezustand reduziert ist, vorzugsweise um mehr als 30 %.

3. Verfahren nach Anspruch 1 oder 2, **dadurch gekennzeichnet, dass** die thixotrope Masse (122) in Vibration versetzt wird, wobei die Vibration im Frequenzbereich von 3000 bis 5000 Schwingungen pro Minute liegt und/oder einen Hub von 0,5 bis 1,5 mm aufweist.

4. Verfahren nach einem der vorherigen Ansprüche, **dadurch gekennzeichnet, dass** die Vibration durch das Schutzrohr (23) auf die thixotope Masse (122) übertragen wird, insbesondere unter Benutzung eines Rüttlers (502).

5. Verfahren nach einem der vorherigen Ansprüche, **dadurch gekennzeichnet, dass** die Vibration durch das Thermistorelement (21) auf die thixotope Masse (122) übertragen wird.

6. Verfahren nach einem der vorherigen Ansprüche, **dadurch gekennzeichnet, dass** die thixotropen Masse (122) zum Zeitpunkt des Einführens des Thermistorelements (21) einen Verflüssiger enthält, wobei der Verflüssiger insbesondere eine Carbonsäure und/oder ein kurzkettiges Acrylat und/oder ein Polyglycol enthält.

7. Verfahren nach einem der vorherigen Ansprüche, **dadurch gekennzeichnet, dass** die thixotrpen Masse (122) Glas und einen keramischen Werkstoff, insbesondere Sinterkorund, enthält.

8. Verfahren nach einem der vorherigen Ansprüche, **dadurch gekennzeichnet, dass** der in der thixotropen Masse (122) enthaltene keramische Werkstoff eine erste Komponente und eine zweite Komponente enthält, wobei die erste Komponente eine Tabulartonerde ist und die zweite Komponente eine Reaktivtonerde.

9. Verfahren nach Anspruch 8, **dadurch gekennzeichnet, dass** die Tabulartonerde eine Oberkorngröße von 20 - 125 µm aufweist und die Reaktivtonerde eine mittlere Korngröße D50 von 0,2 - 1 µm aufweist.

10. Verfahren nach einem der vorherigen Ansprüche, **dadurch gekennzeichnet, dass** in der thixotropen Masse (122) Glas in Form von Glasfritte vorliegt

11. Verfahren nach einem der vorherigen Ansprüche, **dadurch gekennzeichnet, dass** die thixotrope Masse (122) einen Glasanteil zwischen 25 und 45 Gewichts-% aufweist.

12. Verfahren nach einem der vorherigen Ansprüche, **dadurch gekennzeichnet, dass** die thixotrope Masse (122) während des Einführens des Thermistorelements (21) Raumtemperatur hat

13. Verfahren nach einem der vorherigen Ansprüche, **dadurch gekennzeichnet, dass** die thixotrope Masse (122) während des Einführens des Thermistorelements (21) einen Wassergehalt von 5 - 15 Gew-% hat.

14. Verfahren nach einem der vorherigen Ansprüche, **dadurch gekennzeichnet, dass** die thixotropen Masse (122) durch eine Wärmebehandlung (503) auskristallisiert.

15. Verfahren nach Anspruch 14, **dadurch gekennzeichnet, dass** die thixotrope Masse bei dem Auskristallisieren eine Volumenzunahme von mindestens 0,5 %, bevorzugt 2 - 3%, erfährt.

16. Verfahren nach Anspruch 14 oder 15, **dadurch gekennzeichnet**, die Wärmebehandlung in einem Temperaturbereich von 800 bis 950 °C und mit einer Haltezeit von 10 bis 150 min erfolgt.

17. Temperatursensor, hergestellt durch Verfahren nach einem der Ansprüche 1 bis 16, **dadurch gekennzeichnet, dass** das Fixierteil (22) einen Porenanteil von weniger als 5%, bevorzugt 1 - 3%, aufweist.

18. Temperatursensor nach Anspruch 17, **dadurch gekennzeichnet, dass** das Fixierteil (22) eine kristalline Struktur aufweist.

19. Temperatursensor nach Anspruch 17 oder 18, **dadurch gekennzeichnet, dass** das Thermistorelement (21) aus einem Widerstandsteil (211) und einer den Wiederstandsteil umschließenden Umhüllung (212) besteht und der Wiederstandsteil (211) durch die Umhüllung (212) hindurch mit zwei Zuleitungen (213a, 213b) verbunden ist und die Zuleitungen (213a, 213b) zumindest teilweise in dem Fixierteil (22) verlaufen.
